# EUROPEAN PATENT SPECIFICATION

(11) **EP 4 231 812 B1**
(45) Date of publication and mention of the grant of the patent: **25.03.2026**
(21) Application number: 21957151.0
(22) Date of filing: 18.09.2021
(51) Int. Cl.: A01D 34/64, B60L 50/00, A01D 34/00, A01D 69/02

(54) **RIDING LAWN MOWER**
RASENMÄHER
TONDEUSE À GAZON AUTOPORTÉE

(43) Date of publication of application: 30.08.2023
(73) Proprietor: Nanjing Chervon Industry Co., Ltd., Nanjing, Jiangsu 211106 (CN)
(72) Inventor: YANG, Dezhong, Nanjing, Jiangsu 211106 (CN); LI, Tonghao, Nanjing, Jiangsu 211106 (CN); LIU, Yangzi, Nanjing, Jiangsu 211106 (CN); WANG, Lei, Nanjing, Jiangsu 211106 (CN)
(74) Representative: Sun, Yiming
(86) International application number: PCT/CN2021/119281
(87) International publication number: WO 2023/039872

(56) References cited:
- EP-A1- 2 105 337
- EP-A1- 3 175 697
- EP-A1- 3 977 841
- EP-A1- 4 067 155
- WO-A1-2020/164831
- WO-A1-2021/004484
- WO-A1-2021/004484
- WO-A1-2021/143723
- CN-A- 1 307 445
- CN-A- 109 379 976
- CN-A- 111 492 783
- CN-U- 205 454 604
- US-A- 5 713 189
- US-A1- 2018 177 128

## Description

### TECHNICAL FIELD

This present application relates to a riding lawn mower.

### BACKGROUND

US 5 713 189 A describes an interactive braking system for an electric mower comprising a directional control that is connected to a cam follower that, in turn, engages a brake lever. A linkage system connects the brake lever to a brake caliper assembly which is operable to engage a disc connected to an input shaft of a transaxle of a riding mower. The interactive braking system is designed to allow the operator to optimize control of the mower during slow-speed operation. During these conditions, the directional control can be articulated to a slow-speed position, thus proportionally engaging the brake assembly. Increased braking force is realized the closer the directional control approaches the neutral position (zero throttle). The system provides enhanced control of the mower during slow-speed operation of both forward and rearward movement. An electronic throttle control system is connected to the directional control and produces a signal proportional to the direction and speed desired by the operator. Alternative embodiments include using drum brakes, hydraulically actuated brakes or electronically controlled brakes.

WO 2021/004484 A1 describes riding lawn mower and a control method therefor. The riding lawn mower comprises: a seat; a power output assembly comprising a mowing element and a power output motor for driving the mowing element to output power; and a walking assembly comprising wheels for driving the riding electric lawn mower to walk on the ground, walking motors for driving the wheels, and a walking controller for controlling the walking motors, the wheels including driving wheels formed at two sides. The riding lawn mower further comprises a control assembly, an operation assembly comprising a steering wheel, a central controller and a position sensor, the position sensor being provided on the steering wheel and used for detecting a rotational operation action of a user on the operation assembly, the central controller being communicatively connected to the position sensor and acquiring a rotational operation instruction, and controlling a rear wheel by means of the walking controller to actively travel at a differential speed for steering.

EP 2 105 337 A1 describes an electronic engine speed control system for a grass mowing machine powered by an internal combustion engine includes a microcontroller providing an output signal to an engine speed actuator for the engine, a pedal position sensor connected to a foot pedal and providing a voltage input signal to the microcontroller based on the position of the foot pedal, a PTO clutch switch or sensor providing a signal input to the microcontroller indicating if a PTO clutch is engaged, and a lever position sensor connected to a hand lever and having a range of positions including an Automatic mode position and a plurality of Manual mode positions. The hand lever position sensor provides a voltage input signal to the microcontroller in the Automatic mode position such that the microcontroller output to the engine speed actuator is related to the voltage inputs from the pedal position sensor and PTO clutch switch or sensor, and provides a voltage input signal to the microcontroller in a range of Manual mode positions such that the microcontroller output to the engine speed actuator is related to the voltage input from the lever position sensor.

Lawn mowers are widely used in gardening to trim lawn and vegetation. Lawn mowers generally include hand push lawn mowers and riding lawn mowers. A user sits on and drives the riding lawn mower to perform lawn mowing tasks, making lawn mowing more efficient and less tiring. How to improve the driving experience of the riding lawn mower has been a subject that engineers have been consistently working on.

### SUMMARY

The present application provides a riding lawn mower with a pedal assembly to provide a stronger and quicker control of the walking process of the riding lawn mower.

The present invention is defined by the appended claims.

### BRIEF DESCRIPTION OF DRAWINGS

FIG. 1 is a perspective view of a riding lawn mower according to an embodiment of the present application;
FIG. 2 is a perspective view of a pedal assembly of the riding lawn mower of FIG. 1;
FIG. 3 is another perspective view of the pedal assembly of FIG. 2 with its cover removed;
FIG. 4 is a schematic diagram of the rotation of a pedal lever of the pedal assembly of FIG. 2;
FIG. 5 is a sectional view of the pedal assembly of FIG.2;
FIG. 6 is another sectional view of the pedal assembly of FIG. 2;
FIG. 7 is an explosion view of the pedal assembly of FIG. 2;
FIG. 8 is a graph of the mapping function between the angular position of the pedal lever and the target rotational speed of the walking motor of the riding lawn mower of FIG. 1;
FIG. 9 is another graph of the mapping function between the angular position of the pedal lever and the target rotational speed of a walking motor of the riding lawn mower of FIG. 1;
FIG. 10 is a circuit diagram of the walking motor of the riding lawn mower of FIG. 1;
FIG. 11 is a control system of the walking motor of the riding lawn mower of FIG. 1;
FIG. 12 is another control system of the walking motor of the riding lawn mower of FIG. 1;
FIG. 13 is a flow chart of a signal processing device according to an embodiment;
FIG. 14 is a graph of raw position signal and processed position signal;
FIG. 15 is a schematic diagram of the signal processing device according to another embodiment; and
FIG. 16 is a flow chart of the signal processing device of FIG. 15.

### DETAILED DESCRIPTION

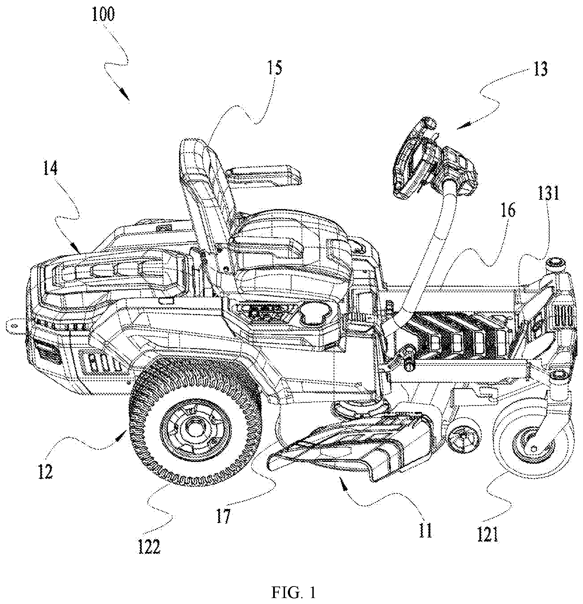

As shown in FIG. 1, a riding lawn mower 100 can be operated by a user sitting on the riding lawn mower 100 to effectively and quickly trim the lawn, vegetation, etc. Comparing with hand push/walk behind lawn mowers, the riding lawn mower 100 of the present disclosure does not require the user to push the machine, nor does it require the user to walk on the ground. Further, because of its large size, the riding lawn mower 100 is able to carry larger or more batteries, which brings a longer working time, so that the user can trim larger lawn areas, and trim for a longer time effortlessly. Furthermore, in terms of energy source, unlike existing riding lawn mowers, the riding lawn mower 100 uses electric energy rather than gasoline or diesel, thus the riding lawn mower 100 is more environmental friendly, cheaper in usage cost, and less prone to leakage, failure and maintenance.

It is appreciated that aspects of this disclosure are also applicable to riding machines of other types, as long as the riding machine can output power in other forms besides walking power in order to realize other functions besides walking, such as, for example, riding snow blowers, riding agricultural machines, and riding sweepers. In fact, as long as these tools include the substance described below in this disclosure, they all fall within the scope of this disclosure.

Those skilled in the art should understand that, in the disclosure of this application, the terms "controller", "control unit", "module", "unit" and "processor" may include or relate to at least one of hardware or software.

Those skilled in the art should understand that, in the disclosure of this application, the terms "up", "down", "front", "rear", "left", "right" and the like indicate the orientation or positional relationship based on the orientation or positional relationship shown in the drawings, which are only for the convenience of describing the present application, and do not indicate or imply that the device or element referred to must have a specific orientation, or be constructed and operated in a specific orientation, and therefore the above terms should not be understood as a limitation of the present application.

Referring to FIG. 1, the riding lawn mower 100 includes: a cutting assembly 11, a walking assembly 12, an operating assembly 13, a power supply assembly 14, a seat 15, a chassis 16, and a deck 17.

The chassis 16 is the main supporting frame of the riding lawn mower 100, and the chassis 16 at least partially extends in a front and rear direction. The seat 15 is configured for a user to sit thereon, and the seat 15 is mounted on the chassis 16. The deck 17 is configured to accommodate the cutting assembly 11, and the deck 17 is installed under the chassis 16.

According to FIG.1, the direction toward which the user sits on the seat is defined as the front or the front side of the riding lawn mower 100; and the direction opposite to the front is defined as the rear or rear side of the riding lawn mower 100. The user's left hand direction is defined as the left or left side of the riding lawn mower 100; and the user's right hand direction is defined as the right or right side of the riding lawn mower 100. The direction toward the ground is defined as the down or lower side of the riding lawn mower 100; and the direction opposite to the down is defined as the up or upper side of the riding lawn mower 100.

The cutting assembly 11 includes a cutting member, such as, for example, a blade, for realizing a cutting function. The cutting assembly 11 is mounted to the chassis 16, under the deck 17. In other words, the deck 17 forms a semi-opening accommodating cavity to accommodate the cutting member. The cutting assembly 11 further includes a cutting motor for driving the cutting member to rotate. The cutting assembly 11 may include more than one cutting members and more than one cutting motors. The cutting motors are controlled by a cutting control module. In some embodiments, the cutting control module includes a control chip, such as MCU, ARM, and so on.

The walking assembly 12 is configured to enable the riding lawn mower 100 to walk on the ground. The walking assembly 12 may include at least one first walking wheel 121 and at least one second walking wheel 122, for example, two second walking wheels 122, namely a left second walking wheel 122L and a right second walking wheel 122R. The walking assembly 12 may also include at least one walking motors 123 for driving the second walking wheel 122, for example, two walking motors 123, namely a left walking motor 123L and a right walking motor 123R. In this way, when the two walking motors 123 drive the corresponding second walking wheels 122 to rotate at different speeds, a speed difference is generated between the two second walking wheels 122, so as to steer the riding lawn mower 100. The walking motor 123 is controlled by a walking control module 124. In some embodiments, the walking control module 124 includes a control chip, such as MCU, ARM, and so on. In one embodiment, two walking control modules 124 control the two walking motors 123, respectively. In one embodiment, one central walking control module 124 controls the two walking motors 123.

The power supply assembly 14 is configured to supply electric power to the riding lawn mower 100. The power supply assembly 14 is configured to at least supply electric power to the cutting motors 112 and the walking motors 123. The power supply assembly 14 may also supply electric power to other electronic components in the riding lawn mower 100, such as the cutting control module 113 and the walking control module 124. The power supply assembly 14 may also supply electric power to a lighting assembly. In some embodiments, the power supply assembly 14 is provided on the rear side of the seat 15 on the chassis 16. In some embodiments, the power supply assembly 14 includes a plurality of battery packs 141 capable of supplying electric power to the riding lawn mower 100.

The operating assembly 13 is operable by the user, and the user sends control instructions through the operating assembly 13 to control the operation of the riding lawn mower 100. The operating assembly 13 can be operated by the user to set the cutting speed, walking speed, walking direction, etc. of the riding lawn mower 100. In other words, the operating assembly 13 can be operated by the user to set an operating status for the riding lawn mower 100, wherein the operating status includes a cutting status and a walking status.

The operating assembly 13 may include at least one switch triggerable to change its state so as to set the riding lawn mower 100 in different status. For example, a seat switch (not shown) arranged under the seat 15 is configured to set the riding lawn mower 100 in a bootable state when the user is sitting on the seat, and set the riding lawn mower 100 in a non-bootable state when no one is sitting on the seat. A start button 133 is configured to start the riding lawn mower 100 when the user presses the start button 133, and stop the riding lawn mower 100 when the user presses the start button 133 again. A key switch 134 is configured to start the walking motor 123 when the user inserts a key and rotates the key to the on position, and stop the walking motor 123 when the user rotates the key to the off position or pulls the key out. A blade actuator 135 is configured to make the cutting member 111 rotate when the user lifts the blade actuator 135 up and stop the cutting member 111 when the user presses the blade actuator 135 down.

The operating assembly 13 may also include a combination of one or more operating mechanisms such as pedal, lever, handle, and steering wheel. For example, a speed control pedal combined with a steering wheel is configured to set up a system for the user to control at least the walking function of the riding lawn mower 100. The operating assembly 13 may also include a control panel. The control panel may include a plurality of buttons, wherein different buttons correspond to different commands. The control panel may also include a display interface, which displays the operating status of the riding lawn mower 100. The user inputs different control commands through the control panel to control the walking and cutting function of the riding lawn mower 100.

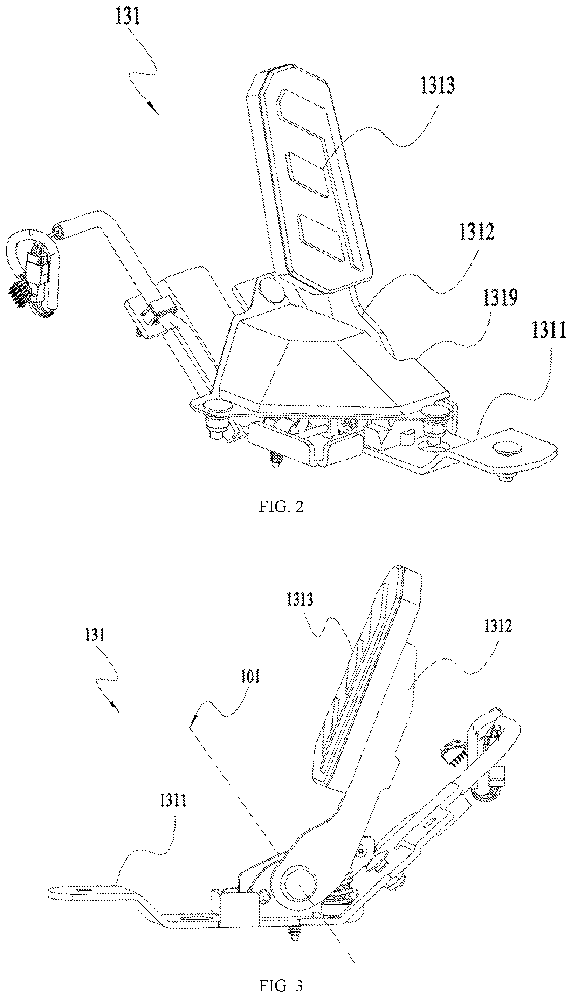

In one embodiment, the speed control pedal is a pedal assembly 131. As shown in FIG.2, the pedal assembly 131 includes a base 1311 for supporting individual parts of the pedal assembly 131 and mounting the pedal assembly 131 to the chassis 16. The pedal assembly 131 also includes a cover 1319 for covering individual parts of the pedal assembly 131. As shown in FIGS.3-7, the pedal assembly 131 includes a pedal lever 1312 rotatable about a first shaft axis 101 and a pedal position sensor 132 that detects the angular position of the pedal lever 1312. In one embodiment, the pedal lever 1312 is formed with or fixedly mounted with a pedal surface 1313 for the user to step thereon easily. The pedal surface 1313 may be covered with at least one of anti-slip materials or anti-slip patterns, such as rubber tapes or rubber strips. When the pedal surface 1313 is stepped by the user, the pedal lever 1312 rotates about the first shaft axis 101. The more force the user applies to the pedal surface 1313, the greater degree the pedal lever 1312 rotates.

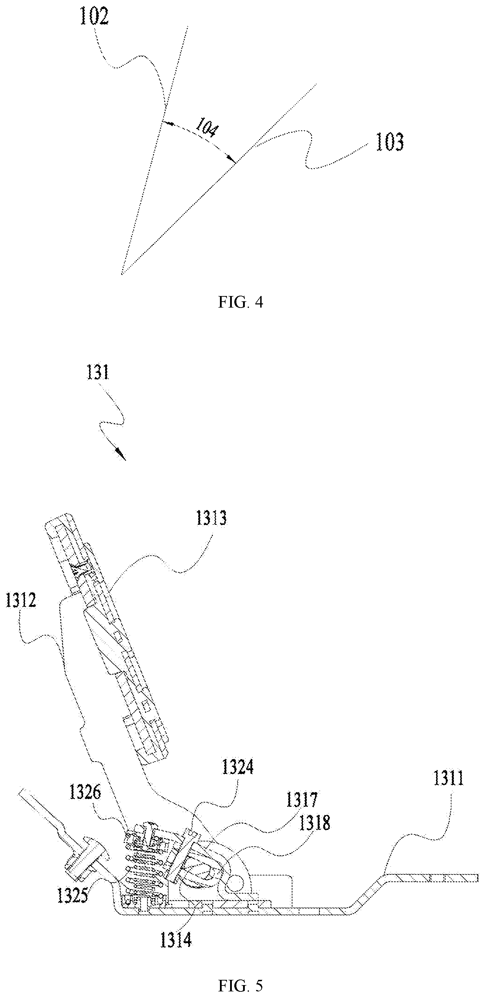

Referring to FIG. 4, the pedal lever 1312 has an initial position 102 and an end position 103. When no force is applied to the pedal lever 1312, for example, when the user's foot is not on the pedal surface 1313, the pedal lever 1312 is at its initial position 102. When the user steps the pedal surface 1313 until the pedal lever 1312 cannot rotate any further, the pedal lever 1312 is at its end position 103. Referring to FIG.4, a rotatable range 104 is defined as an included angle between the initial position 102 and the end position 103. The pedal lever 1312 is operable by the user to reach any angular position within the rotatable range 104, including the initial position 102 and the end position 103. The minimum value of the rotatable range 104 is 0 degrees, which is defined as the initial position 102 of the pedal lever 1312. In one embodiment, the maximum value of the rotatable range 104 is 20 degrees, that is, the end position 103 of the pedal lever 1312 is 20 degrees from the initial position 102 of the pedal lever 1312; alternatively, the maximum value of the rotatable range 104 is 30 degrees; alternatively, the maximum value of the rotatable range 104 is 40 degrees; alternatively, the maximum value of the rotatable range 104 is 50 degrees.

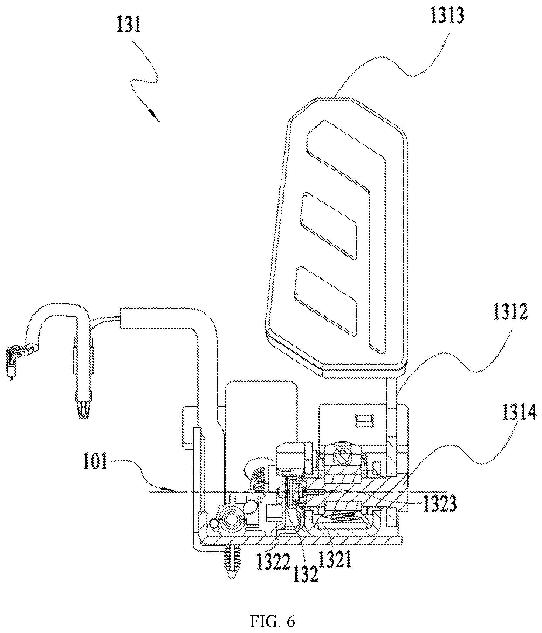

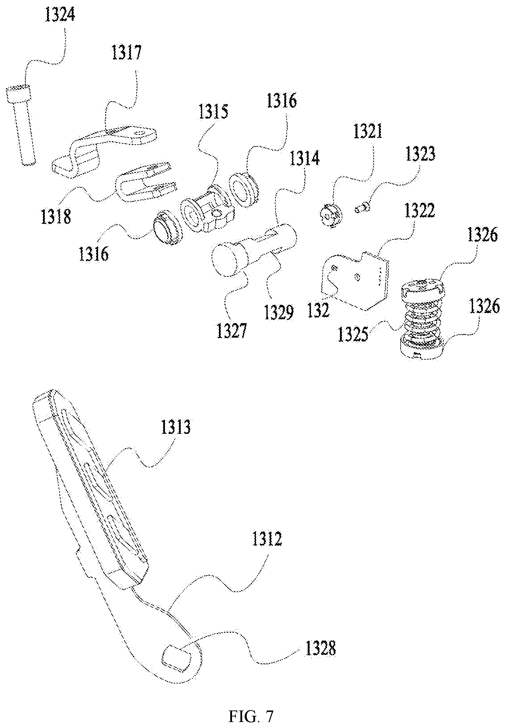

Referring to FIGS.6 and 7, the pedal assembly 131 further includes a transmission shaft 1314 supported by the base 1311. Two supporting rings 1316 are arranged at both ends of the transmission shaft 1314 to enable the transmission shaft 1314 to rotate about the first shaft axis 101. In fact, the pedal lever 1312 and the transmission shaft 1314 form a synchronous rotation about the first shaft axis 101. In one embodiment, the pedal lever 1312 transmits rotary power to the transmission shaft 1314 through a flat fit. For example, the transmission shaft 1314 has a double D portion 1327, and the pedal lever 1312 is formed with a double D hole 1328. When the double D portion 1327 of the transmission shaft 1314 is engaged with the double D hole 1328 of the pedal lever 1312, i.e., when the double D portion 1327 of the transmission shaft 1314 is in the double D hole 1328 of the pedal lever 1312, a rotary motion of the pedal lever 1312 causes a rotary motion of the transmission shaft 1314, and vice versa.

In one embodiment, the pedal assembly 131 further includes a transmission lever 1317 and a return spring 1325. The transmission lever 1317 and the return spring 1325 act as a force feedback mechanism and a restoration mechanism. As shown in FIGS.5 and 7, the transmission lever 1317 and the transmission shaft 1314 form a synchronous rotation. In one embodiment, a U-shaped member 1318 may be assembled between another double D portion 1329 of the transmission shaft 1314 and the transmission lever 1317. In one embodiment, the transmission shaft 1314 may be embraced by a shaft sleeve 1315 so as to fill in the space between the transmission shaft 1314 and the U-shaped member 1318, which smooths and buffers the engagement between the transmission shaft 1314 and the U-shaped member 1318. The transmission lever 1317, the U-shaped member 1318, the shaft sleeve 1315 can be fixed together by a fixing member 1324, for example, by a long bolt. Thus, a rotary motion of the transmission shaft 1314 causes a rotary motion of the shaft sleeve 1315, the U-shaped member 1318, and the transmission lever 1317, and vice versa. Therefore, the pedal lever 1312 forms a synchronous rotation with the transmission lever 1317 through the transmission shaft 1314.

The return spring 1325 is arranged under one end of the transmission lever 1317 so that when the transmission lever 1317 rotates, the return spring 1325 gets compressed, thereby generating a restoring force. In one embodiment, the return spring 1325 is stuck in between two caps 1326, that is, each end of the return spring 1325 is confined by a cap 1326, wherein one cap 1326 is fixed to the base 1311 and the other cap 1326 is fixed to one end of the transmission lever 1317, for example, by a screw. Therefore, the position of the return spring 1325 is relatively fixed, reducing the possibility of spring displacement. In another aspect, more than one return springs 1325 can be arranged to alleviate the problem of spring aging or breakage. In one embodiment, two return springs 1325 can be nested, that is, a return spring 1325 of a smaller diameter is placed inside a return spring 1325 of a larger diameter. In other embodiments, a plurality of return springs 1325 may be arranged in parallel.

When the user steps onto the pedal surface 1313, depending on the force applied to the pedal surface 1313, the pedal lever 1312 rotates by a certain degree D. As a consequence, the transmission shaft 1314, the shaft sleeve 1315, the U-shaped member 1318, and the transmission lever 1317 all rotates by degree D. At this time, the end of the transmission lever 1317 above the restore spring moves downward, therefore compresses the return spring 1325, and the return spring 1325 generates a restoring force, which gets counteracted by the force applied by the user, however, the restoring force serves as a feedback force, which improves user's feelings when stepping on the pedal surface 1313. When the user releases the pedal, i.e., no force is applied to the pedal surface 1313, the return spring 1325 restores its length, and pushes the transmission lever 1317, and thus the U-shaped member 1318, the shaft sleeve 1315, the transmission shaft 1314, and the pedal lever 1312 back. In other words, the return spring 1325 biases the pedal lever 1312 to its initial position 102.

As shown in FIGS. 6 and 7, the pedal assembly 131 further includes a magnetic element 1321 and a pedal position sensor 132 for detecting the angular position of the pedal lever 1312. The magnetic element 1321 is fixed to the transmission shaft 1314 so that the magnetic element 1321 forms a synchronous rotation with the transmission shaft 1314. In one embodiment, the magnetic element 1321 is pinned to one end of the transmission shaft 1314 through a fastener 1323, such as, a screw. In one embodiment, the magnetic element 1321 is fastened to one end of the transmission shaft 1314 while the pedal lever 1312 is coupled with the other end of the transmission shaft 1314. Therefore, through the transmission shaft 1314, the rotary motion of the magnetic element 1321 reflects the rotary motion of the pedal lever 1312. The pedal position sensor 132 is arranged near the magnetic element 1321. In one embodiment, the pedal position sensor 132 is a three-dimensional sensor disposed on a printed circuit board (PCB) 1322. The PCB 1322 may be disposed vertically, that is, the plane on which the PCB 1322 is located is perpendicular to the first shaft axis 101, so that the pedal position sensor 132 protruding from the PCB 1322 is close to and facing the magnetic element 1321. In one embodiment, the pedal position sensor 132 is a Tunnel Magneto-Resistance (TMR) sensor that detects the angular position of the magnetic element 1321.

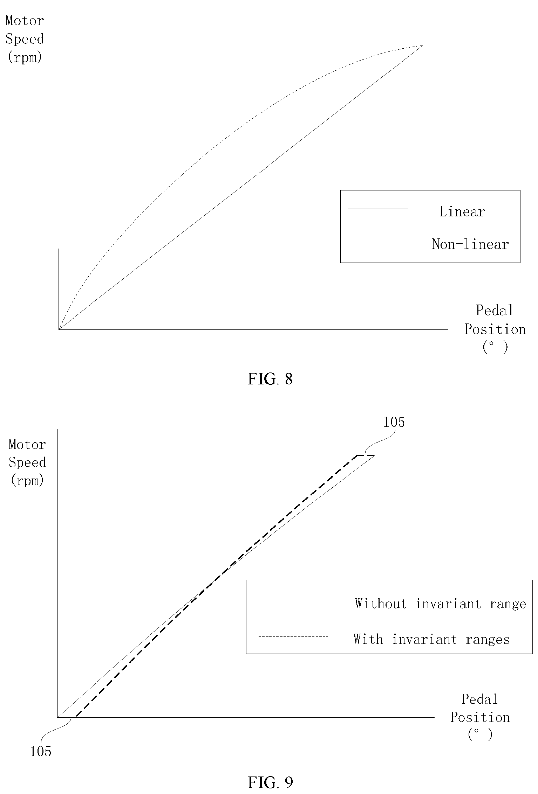

The pedal position sensor 132 outputs angular position signals, or position signals for short, to the walking control module 124, wherein the angular positions may be represented in degree values. The walking control module 124 maps each position signal to a target rotational speed of the walking motor 123, in order to make the riding lawn mower 100 reach a desired walking speed. Taking a rotatable range 104 of 0 to 30 degrees as an example, when the pedal lever 1312 is at the initial position 102 of 0 degrees, the pedal position sensor 132 outputs a position signal of 0 degrees, which is mapped to a target rotational speed of 0 rpm, resulting in a walking speed of 0 km/h, meaning parking the riding lawn mower 100. When the pedal lever 1312 is at the end position 103 of 30 degrees, the pedal position sensor 132 outputs a position signal of 30 degrees, which is mapped to a maximum target rotational speed of the walking motor 123 that results in a maximum walking speed of the riding lawn mower 100, such as, 9 km/h, 12 km/h, 15km/h, 18 km/h, and so on. Referring to FIG. 8, the mapping function between the angular position of the pedal lever 1312 and the target rotational speed of the walking motor 123 may be liner. For example, if the rotatable range 104 is 0 to 30 degrees and the maximum walking speed of the riding lawn mower 100 is 12km/h, when the pedal position sensor 132 outputs a position signal of 20 degrees, the walking control module 124 set the target rotational speed of the walking motor 123 to reach a desired walking speed of 8 km/h; when the pedal position sensor 132 outputs a position signal of 10 degrees, the walking control module 124 set the target rotational speed of the walking motor 123 to reach a desired walking speed of 4 km/h. Alternatively, referring to FIG. 9, the mapping function between the angular position of the pedal lever 1312 and the target speed of the riding lawn mower 100 may not be liner. The configuration is similar if the riding lawn mower 100 walks backward. The riding lawn mower 100 may be provided with other operating member operable by the user to enter a reverse mode. In the reverse mode, the user also operates the pedal lever 1312 to control the backward walking speed, except that for safety considerations, the maximum walking speed of the riding lawn mower 100 moving backward is generally configured to be less than the maximum walking speed of the riding lawn mower 100 moving forward. Therefore, the slope of the mapping function between the angular position of the pedal lever 1312 and the target rotational speed of the walking motor 123 when the riding lawn mower 100 moves backward may be less steep than the slope of the mapping function between the angular position of the pedal lever 1312 and the target rotational speed of the walking motor 123 when the riding lawn mower 100 moves forward.

When the value of the angular position of the pedal lever 1312 increases, i.e., from a smaller value in the rotatable range 104 to a greater value in the rotatable range 104, the walking control module 124 drives the walking motor 123 to accelerate. That is, when the user operates the pedal lever 1312 in such a way that the pedal lever 1312 moves from an angular position corresponding to a lower rotational speed to an angular position corresponding to a higher rotational speed, the walking control module 124 drives the walking motor 123 to accelerate to reach the higher rotational speed. When the value of the angular position of the pedal lever 1312 decreases, i.e., from a greater value in the rotatable range 104 to a smaller value in the rotatable range 104, the walking control module 124 drives the walking motor 123 to decelerate. That is, when the user operates the pedal lever 1312 in such a way that the pedal lever 1312 moves from an angular position corresponding to a higher rotational speed to an angular position corresponding to a lower rotational speed, the walking control module 124 drives the walking motor 123 to decelerate to reach the lower rotational speed. Specifically, when the user releases the pedal lever 1312, the return spring 1325 biases the pedal lever 1312 back into the initial position 102, the walking control module 124 controls to walking motor 123 to reach the target rotational speed of 0 rpm, in other words, the walking control module 124 parks the riding lawn mower 100. In fact, whenever the pedal lever 1312 is in the initial position 102 and the power supply assembly 14 is supplying electric power to the motor 123 and the walking control module 124, the walking control module 124 controls the riding lawn mower 100 to park. In this way, unlike traditional accelerator pedals, which let the wheels rotate freely once released, the pedal assembly 131 along with the walking control module 124 provides a stronger and quicker control of the riding lawn mower 100.

In one embodiment, as shown in FIG.9, the rotatable range 104 includes at least one invariant range 105, wherein the walking control module 124 maps all position signals within the invariant range 105 to the same target rotational speed of the walking motor 123. The number of invariant ranges 105 may be 2 and each invariant range 105 may be 2 degrees, for the initial position 102 and the end position 103, to allow for unintentional moves or jitters of the pedal lever 1312. For example, when the return spring 1325 ages, it might not be able to restore the pedal lever 1312 to its initial position 102 perfectly, so instead of restoring the pedal lever 1312 to 0 degrees, the return spring 1325 may restore the pedal lever 1312 to somewhere around 1 degree, in this case the walking control module 124 still recognizes it as a parking command. For another example, when the user keeps pushing the pedal lever 1312 to its end position 103 over a period of time, road bumps might cause the pedal lever 1312 to leave its end position 103 briefly, in this case the walking control module 124 ignores such subtle changes and remains the full speed. In one embodiment, the rotatable range 104 is 0 to 30 degrees, and the invariant ranges 105 are 0 to 2 degrees and 28 to 30 degrees. When the pedal position sensor 132 outputs an angular position of 0 to 2 degrees, the target rotational speed of the walking motor 123 is 0 rpm; when the pedal position sensor 132 outputs an angular position of 28 to 30 degrees, the target rotational speed of the walking motor 123 is the maximum target rotational speed. In some embodiments, either an invariant range 105 for the initial position 102 or an invariant range 105 for the end position 103 is arranged.

In one embodiment, the riding lawn mower 100 provides the user with different driving modes. For example, the user may select the driving mode through buttons or interactive display screen, as aforementioned. Different driving modes are configured with different responsiveness, thus giving the user a bunch of driving experiences to select from. For example, the riding lawn mower 100 has a standard mode, a control mode, and a sports mode. The sport mode is configured with the fastest acceleration among the three driving modes, and as a consequence, the sport mode needs the shortest time to reach the maximum walking speed. The sport mode gives a quicker pedal response for a sporty drive, meaning the riding lawn mower 100 accelerates more readily. The standard mode is configured with a slower acceleration than that of the sport mode, and as a consequence, the standard mode needs more time to reach the maximum walking speed. The control mode is configured with a slower acceleration than that of the standard mode, and as a consequence, the standard mode needs the longest time to reach the maximum walking speed. For example, the average acceleration during the control mode is 3.1m/s², and it takes 1200 ms to reach the maximum walking speed; the average acceleration during the standard mode is 4.0 m/s², and it takes 900 ms to reach the maximum walking speed; the average acceleration during the sport mode is 4.4 m/s², and it takes 640 ms to reach the maximum walking speed.

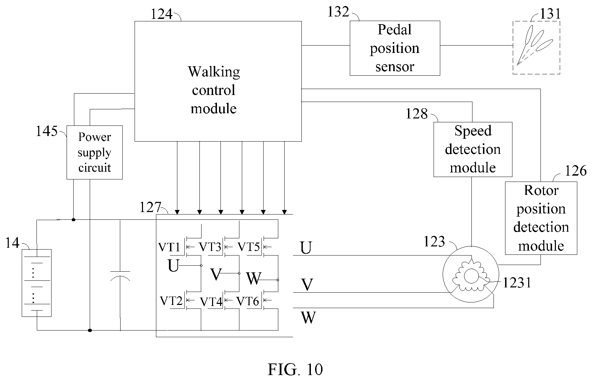

Referring to FIG. 10, in an embodiment, besides the walking control module 124 and the pedal position sensor 132, the control system for the walking motor 123 further includes: a drive circuit 127, a power supply circuit 145, and a speed detection module 128. Since the control systems of the left and the right walking motors 123 have the same or similar functions and components, the control system described in this embodiment is applicable to the control system of the left and the right walking motors 123.

The walking control module 124 is configured to control the walking motor 123. In some embodiments, the walking control module 124 may be a dedicated controller, such as a dedicated control chip (for example, MCU, Microcontroller Unit). The power supply circuit 145 is connected to the power supply assembly 14, and the power supply circuit 145 is configured to receive the power from the power supply assembly 14 and convert the power of the power supply assembly 14 into the power at least used by the walking control module 124. The power supply assembly 14 includes a plurality of aforementioned battery packs 141. The drive circuit 127 is electrically connected to the walking control module 124 and the walking motor 123, and controls the operation of the walking motor 123 according to the drive signal output by the walking control module 124. In an embodiment, the walking motor 123 is a three-phase brushless motor with three-phase windings, and the drive circuit 127 is a three-phase bridge inverter, which includes semiconductor switches VT1, VT2, VT3, VT4, VT5, and VT6. The semiconductor switches VT1-VT6 may be field effect transistors, IGBT transistors, etc. The gate terminal of each switch is electrically connected with the walking control module 124, and the drain or source of each switch is electrically connected with the winding of the walking motor 123.

The walking control module 124 is configured to output corresponding drive signals to the drive circuit 127 based on the target rotational speed of the walking motor 123, the actual rotational speed of the walking motor 123, and the position of the rotor 1231 of the walking motor 123, thereby changing at least one of the voltage or current applied to the windings of the walking motor 123, so as to generate an alternating magnetic field to drive the walking motor 123.

The target rotational speed of the walking motor 123 can be calculated from the angular position signal output by the pedal position sensor 132, which detects the angular position of the pedal lever 1312. The actual rotational speed of the walking motor 123 can be detected by the speed detection module 128, which is coupled to the walking motor 123. In one embodiment, the speed detecting module 128 includes a speed detection sensor, which is disposed near or inside the walking motor 123 to obtain the actual speed of the walking motor 123; for example, a photoelectric sensor installed near the walking motor 123 to obtain the actual rotational speed of the walking motor 123; for another example, a Hall sensor arranged near the rotor 1231 of the walking motor 123 to obtain the actual rotational speed of the walking motor 123. The position of the rotor 1231 of the walking motor 123 can be obtained by the rotor position detection module 126. The rotor position detection module 126 may include sensors, for example, a plurality of Hall sensors. Hall signals can be used to determine the position of the rotor 1231 of the walking motor 123. In one embodiment, the position of the rotor 1231 can also be estimated from the phase currents of the walking motor 123, a current detection module 129 may be provided between the walking motor 123 and the walking control module 124.

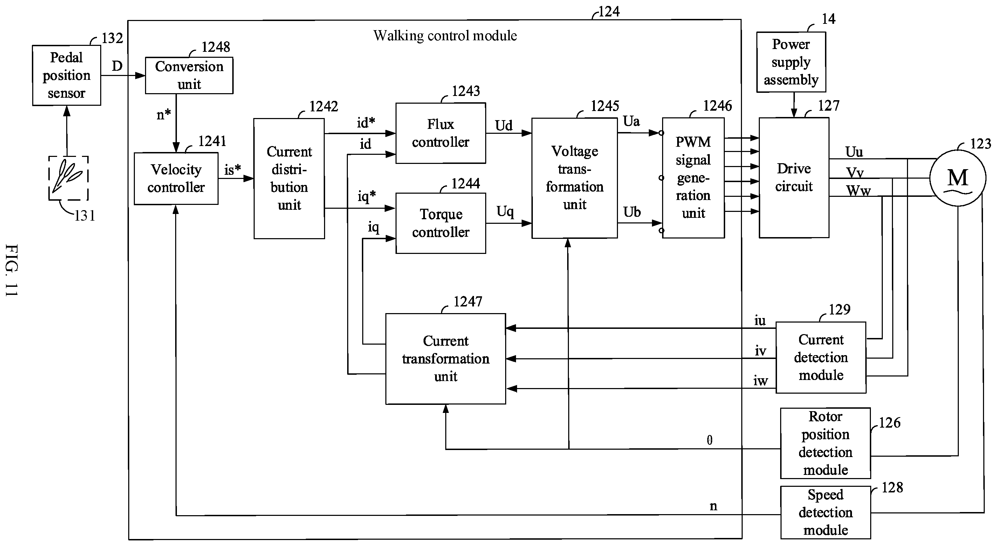

FIG. 11 shows more details of the control method adopted by the walking control module 124. Specifically, the walking control module 124 includes: a conversion unit 1248, a velocity controller 1241, a current distribution unit 1242, a flux controller 1243, a torque controller 1244, a voltage transformation unit 1245, a current transformation unit 1247 and a PWM signal generation unit 1246.

In this embodiment, the pedal position sensor 132 is coupled with the pedal lever 1312, and configured to detect the angular position of the pedal lever 1312. The conversion unit 1248 is configured to receive position signal as input from the pedal position sensor 132 and outputs the target rotational speed n* of the walking motor 123. In one embodiment, a mapping function between the position signal of the pedal position sensor 132 and the target rotational speed n* of the walking motor 123 is stored in the conversion unit 1248.

The velocity controller 1241 is connected with the conversion unit 1248 and the speed detection module 128. The velocity controller 1241 obtains the target rotational speed n* of the walking motor 123 from the conversion unit 1248 and the actual rotational speed n of the walking motor 123 detected by the speed detection module 128. The velocity controller 1241 is configured to generate a target current is* according to the target rotational speed n* and the actual rotational speed n of the walking motor 123 through comparison and adjustment. The target current is* is used to make the actual rotational speed n of the walking motor 123 approach the target rotational speed n*. The velocity controller 1241 includes a comparison and adjustment unit, and the adjustment unit may be a Proportional Integral (PI) adjustment unit. As the name suggests, the PI adjustment unit includes a proportional term and an integral term. In one embodiment, the proportional term is the error between the target rotational speed n* and the actual rotational speed n of the walking motor 123 multiplied by a coefficient of proportionality. Specifically, the coefficient of proportionality, which may also be referred to as the torque coefficient, may vary across different driving modes. The velocity controller 1241 may choose different torque coefficient based on the selected driving mode. For example, the torque coefficient of the sport mode is the greatest, more than 80%; the torque coefficient of the standard mode is around 60%; the torque coefficient of the control mode is the least, less than 40%.

The current distribution unit 1242 is connected to the velocity controller 1241, and is configured to distribute a target direct axis current id* and a target quadrature axis current iq* based on the target current is*. The target quadrature axis current iq* and the target direct axis current id* can be obtained by calculation, or can be set directly, for example, id* may be set to 0. The target direct axis current id* and the target quadrature axis current iq* distributed by the current distribution unit 1242 according to the target current is* can cause the rotor of the walking motor 123 to generate different electromagnetic torque Te, so that the walking motor 123 can reach the target rotational speed n* of the walking motor 123 through different accelerations. Different accelerations include starting accelerations and braking accelerations. The current distribution unit 1242 may choose different torque limit based on the selected driving mode. For example, the torque limit of the sport mode is the greatest, more than 90%; the torque limit of the standard mode is around 80%; the torque limit of the control mode is the least, less than 50%.

The current transformation unit 1247 obtains the three-phase currents iu, iv, and iw through the current detection module 129 and performs current transformation to convert the three-phase currents iu, iv, and iw into two-phase currents, which are the actual direct axis current id and the actual quadrature axis current iq, respectively. In one embodiment, the current transformation unit 1247 includes Park transformation and Clark transformation.

The flux controller 1243 obtains the target direct axis current id* from the current distribution unit 1242 and the actual direct axis current id from the current transformation unit 1247, and generates a first voltage adjustment amount Ud. The first voltage adjustment amount Ud can make the actual direct axis current id approach the target direct axis current id* as soon as possible. The flux controller 1243 includes a comparison and adjustment unit (not shown), the adjustment unit may be PI adjustment, and the flux controller 1243 includes comparing the target direct axis current id* and the actual direct axis current id, and performing the PI adjustment according to the comparison result to generate the first voltage adjustment amount Ud.

The torque controller 1244 obtains the target quadrature axis current iq* from the current distribution unit 1242 and the actual quadrature axis current iq from the current transformation unit 1247, and generates a second voltage adjustment amount Uq. The second voltage adjustment amount Uq can make the actual quadrature axis current iq approach the target quadrature axis current iq*. The torque controller 1244 includes a comparison and adjustment unit (not shown), the adjustment unit may be PI adjustment, and the torque controller 1244 includes comparing the target quadrature axis current iq* and the actual quadrature axis current iq, and performing the PI adjustment according to the comparison result to generate the second voltage adjustment amount Uq.

The voltage transformation unit 1245 obtains the first voltage adjustment amount Ud and the second voltage adjustment amount Uq from the flux controller 1243 and the torque controller 1244 respectively, as well as the position of the rotor of the walking motor 123 from the rotor position detection module 126, and converts the first voltage adjustment amount Ud and the second voltage adjustment amount Uq into intermediate voltage adjustment amounts Ua and Ub related to the three-phase voltage Uu, Uv, Uw applied to the walking motor 123, and output them to the PWM signal generation unit 1246. In one embodiment, the voltage transformation unit 1245 includes inverse Park transformation.

The PWM signal generation unit 1246 generates PWM signals for controlling the switching elements of the driving circuit 127 according to the intermediate voltage adjustment amounts Ua and Ub, so that the power supply assembly 14 can output three-phase voltages Uu, Uv, Uw to be applied to the windings of the walking motor 123. In one embodiment, the PWM signal generation unit 1246 adopts the SVPWM technique. In one embodiment, Uu, Uv, Uw are three-phase symmetrical sine wave voltages or saddle wave voltages, and the three-phase voltages Uu, Uv, Uw form a 120° phase difference with each other.

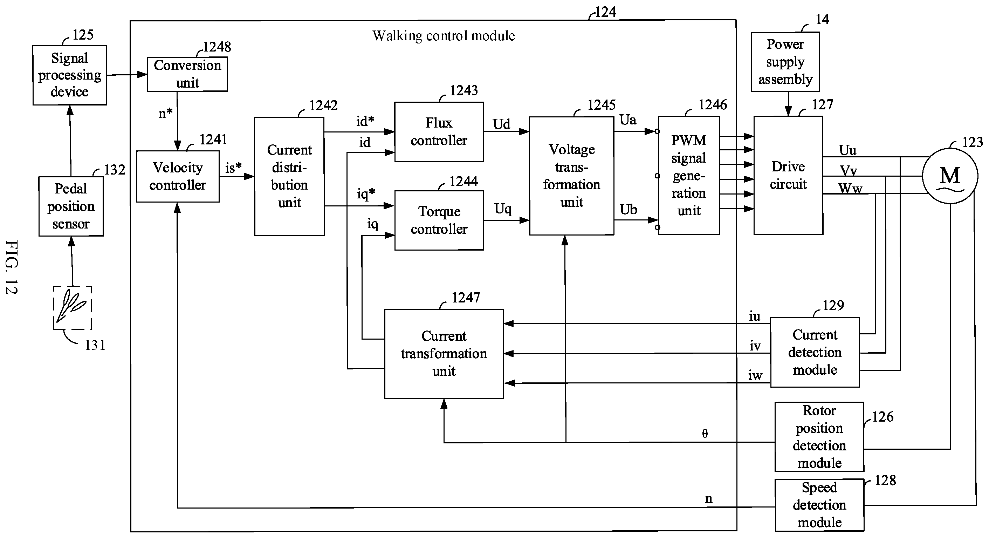

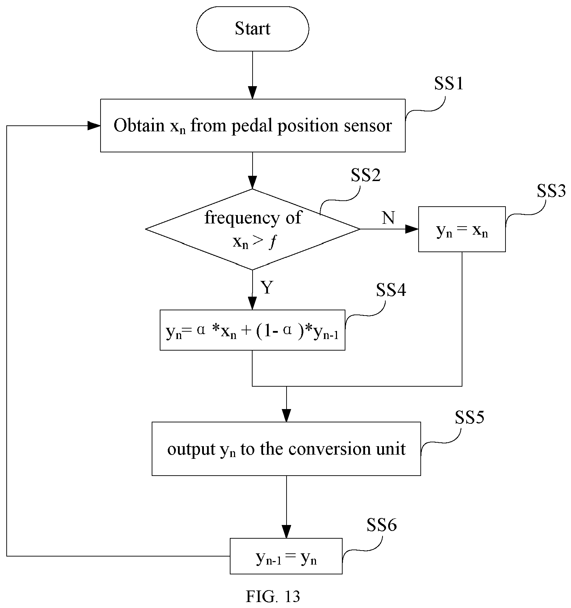

As shown in FIG.12, in one embodiment, in order to give the user a more comfortable driving experience, a signal processing device 125 is arranged between the conversion unit 1248 of the walking control module 124 and the pedal position sensor 132. The signal processing device 125 receives raw position signals from the pedal position sensor 132 and output processed position signals to the conversion unit 1248. In one embodiment, the signal processing device 125 may be a dedicated device, such as a chip, for signal processing; in another embodiment, the signal processing device 125 may be an arithmetic unit of the walking control module 124. The signal processing device 125 includes a filter unit 1251, which filters the raw position signals output by the pedal position sensor 132 before they enter the conversion unit 1248. The filter unit 1251 is configured to attenuate and add latency on raw position signals of high-frequencies, which may be caused by environmental factors like road bumps. In one embodiment, the filter unit 1251 includes a low-pass filter. A low-pass filter is a filter that passes signals with frequencies lower than a selected cutoff frequency and attenuates signals with frequencies higher than the cutoff frequency. Therefore, if the raw position signal output by the pedal position sensor 132 has a frequency lower than or equal to a predefined cutoff frequency f, it gets passed right way; if the raw position signal output by the pedal position sensor 132 has a frequency higher than a predefined cutoff frequency f, the filter unit 1251 calculates the processed position signal with the following formula: yₙ= α *xₙ + (1- α)*yₙ₋₁, wherein yₙ represents the processed position signal after this filtering, yₙ₋₁ represents the processed position signal after the last filtering, xₙ represents the raw position signal obtained from the pedal position sensor 132 for this filtering, and a is the filter coefficient. As shown in FIG.13, in one embodiment, after the riding lawn mower 100 starts and initializes, the filter unit 1251 iterates the following steps every two milliseconds:
SS1: obtain a raw position signal xₙ from the pedal position sensor 132; then go to step SS2;
SS2: determine if the frequency of the signal is higher than the predefined cutoff frequency *f:* if yes, go to step SS4; otherwise go to step SS3;
SS3: assign the processed position signal xₙ the value of xₙ; then go to step SS5;
SS4: calculate the processed position signal yₙ as yₙ= α *xₙ + (1- α)*yₙ₋₁; then go to step SS5;
SS5: output the processed position signal yₙ to the conversion unit 1248; then go to step SS6;
SS6: update the last processed position signal yₙ₋₁ to the processed position signal yₙ; then go back to step SS1.

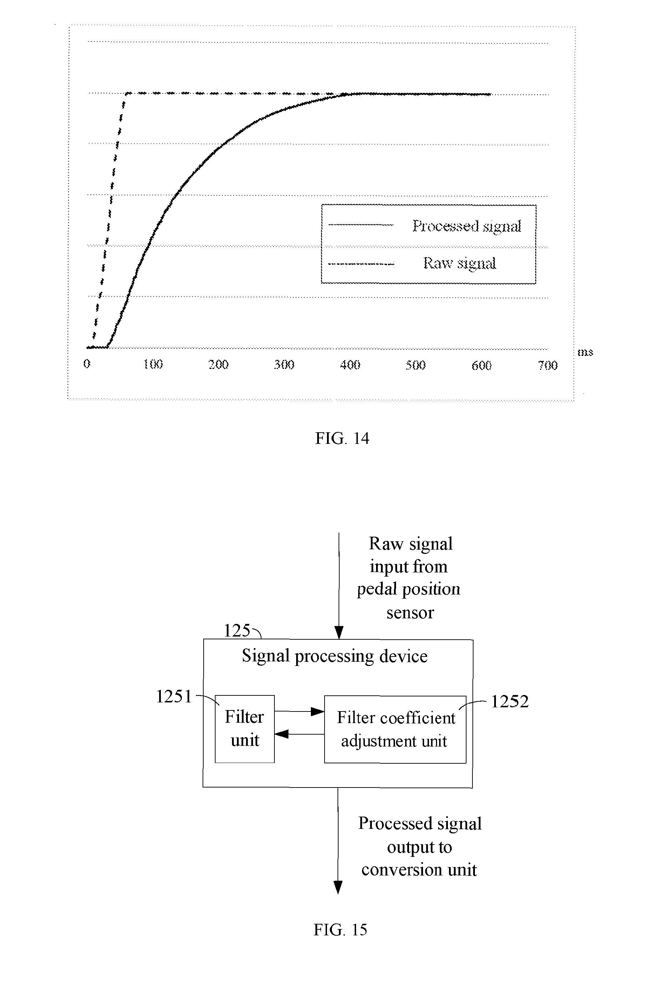

In this way, the processed position signal is a composition of the current position signal and position signals from previous iterations, thereby making the change of the position signals more gradual and smooth, eliminating signal jitters caused by environmental factors like road bumps. An example is shown in FIG.14, where in the filtered position signals are more gradual and smooth, and meanwhile introducing a latency of about 400 milliseconds.

Further, at least one of the filter coefficient α or the cutoff frequency *f* may be updated during the walking process of the riding lawn mower 100 to improve the filtering effect of the filter unit 1251. As shown in FIG. 15, in one embodiment, the signal processing device 125 further includes a filter coefficient adjustment unit 1252. The filter coefficient adjustment unit 1252 computes a difference value between the raw position signal and the processed position signal and set the filter coefficient α and the cutoff frequency *f* of the filter unit 1251 at least based on the difference value. During an acceleration process, when the difference value between the raw position signal and the processed position signal is greater than a first threshold Δ1, the filter coefficient adjustment unit 1252 sets the cutoff frequency *f* to a first cutoff frequency fc1 and sets the filter coefficient α to a first filter coefficient a1. During an acceleration process, when the difference between the raw position signal and the processed position signal is less than a second threshold Δ2, the filter coefficient adjustment unit 1252 sets the cutoff frequency *f* to a second cutoff frequency fc2 and sets the filter coefficient α to a second filter coefficient a2, wherein the second threshold Δ2 is less than the first threshold Δ1, and the second cutoff frequency fc2 is less than the first cutoff frequency fc1, and the first filter coefficient a1 is less than second filter coefficient a2. During a deceleration process, the filter coefficient adjustment unit 1252 sets the cutoff frequency *f* to the second cutoff frequency fc2 and sets the filter coefficient α to the second filter coefficient a2.

The disclosed pedal assembly achieves both functions of speed regulation and parking; the disclosed filter coefficient adjustment unit provides timely adjustment for the filter coefficients to achieve a better filtering effect, together they provide the user with a reliable and smooth driving experience.

In one embodiment, the first threshold Δ1 is greater than or equal to 40% of a maximum rotatable angle of the pedal and less than or equal to 70% of the maximum rotatable angle of the pedal, and the second threshold Δ1 is greater than or equal to 1% of the maximum rotatable angle of the pedal and less than or equal to 20% of the maximum rotatable angle of the pedal. In one embodiment, the first threshold Δ1 is greater than or equal to 50% of the maximum rotatable angle and less than or equal to 60% of the maximum rotatable angle of the pedal, and the second threshold Δ1 is greater than or equal to 3% of the maximum rotatable angle of the pedal and less than or equal to 10% of the maximum rotatable angle. In one embodiment, the first cutoff frequency fc1 is greater than or equal to 1 Hz and less than or equal to 3 Hz, and the second cutoff frequency fc2 is greater than or equal to 0 Hz and less than or equal to 1 Hz. In one embodiment, the first cutoff frequency fc1 is greater than or equal to 1.2 Hz and less than or equal to 2 Hz, and the second cutoff frequency fc2 is greater than or equal to 0.2 Hz and less than or equal to 0.8 Hz.

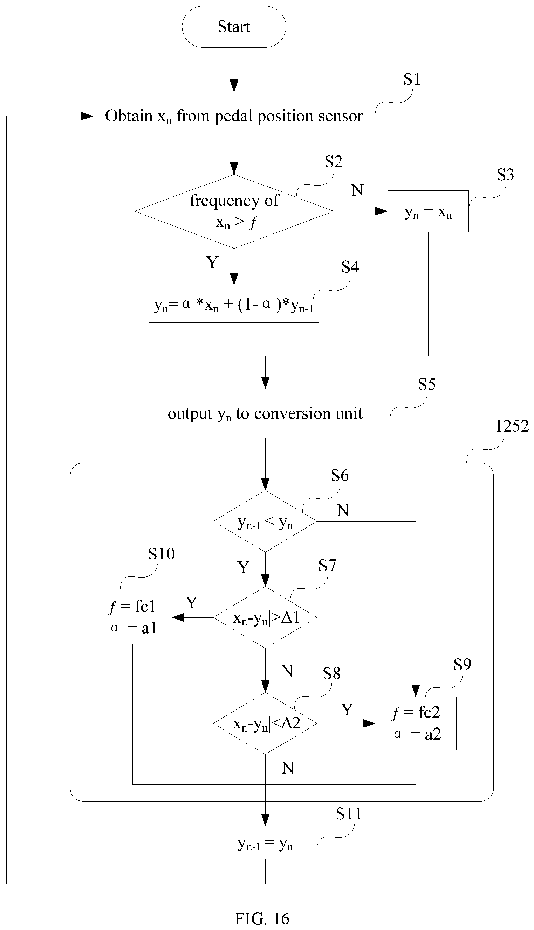

In one embodiment, the acceleration process and the deceleration process can be determined by comparing this processed position signal yₙ with the last processed position signal yₙ. For example, if the last processed position signal yₙ₋₁ is less than this processed position signal yₙ, it is determined that the riding lawn mower 100 is in an acceleration process, otherwise the riding lawn mower 100 is in a deceleration process. Therefore, as shown in FIG.16, after the riding lawn mower 100 starts and initializes, the signal processing device 152 iterates the following steps every two milliseconds, wherein S6-S10 are executed by the filter coefficient adjustment unit 1252:
S1: obtain a raw position signal xₙ from the pedal position sensor 132; then go to step S2;
S2: determine if the frequency of the signal is higher than the predefined cutoff frequency *f:* if yes, go to step S4; otherwise go to step S3;
S3: assign the processed position signal yₙ the value of xn; then go to step S5;
S4: calculate the processed position signal yₙ as yₙ= α *xₙ + (1- α)*yₙ₋₁; then go to step S5;
S5: output the processed position signal yₙ to the conversion unit 1248; then go to step S6;
S6: determine if the last processed position signal yn-1 is less than this processed position signal yₙ: if yes, go to step S7; otherwise go to step S9;
S7: determine if the difference value between the raw position signal xₙ and the processed position signal yₙ is greater than a first threshold Δ1: if yes, go to step S10; otherwise go to step S8;
S8: determine if the difference value between the raw position signal xₙ and the processed position signal yₙ is less than a second threshold Δ2: if yes, go to step S9; otherwise go to step S11;
S9: update the cutoff frequency *f* to fc2; update the filter coefficient α to a2; then go to step S11;
S10: update the cutoff frequency *f* to fc1; update the filter coefficient α to a1; then go to step S11;
S11: update the last processed position signal yₙ₋₁ to the processed position signal yₙ then go back to step S1.

In this way, the filter coefficient adjustment unit 1252 evaluates the difference value between the raw position signal and the processed position signal and modifies the cutoff frequency *f* and the filter coefficient α if necessary in S6 to S11. With the real-time update of the cutoff frequency *f* and the filter coefficient a, the filter unit 1251 achieves a better filtering effect. The jitters are eliminated while not sacrificing responsiveness, thereby improving the user's driving experience of the riding lawn mower 100.

Alternatively, the filter coefficient adjustment unit 1252 does not have to update the filter coefficient α and the cutoff frequency *f* at the same time, for example, during the acceleration process, the filter coefficient adjustment unit 1252 may set the cutoff frequency *f* to the first cutoff frequency fc1 when the difference value is greater than a first frequency threshold Δf1, and set the filter coefficient α to the first filter coefficient a1 when the difference value is greater than a first coefficient threshold Δc1, wherein the first frequency threshold Δf1 is not equal to the second coefficient threshold Δc1. And during the acceleration process, the filter coefficient adjustment unit 1252 may set the cutoff frequency *f* to the second cutoff frequency fc2 when the difference value is less than a second frequency threshold Δf2, and set the filter coefficient α to the second filter coefficient a2 when the difference value is less than a second coefficient threshold Δc2, wherein the second frequency threshold Δf2 is not equal to the second coefficient threshold Δc2, but as before, the second frequency threshold Δf2 is less than the first frequency threshold Δf1, and the second coefficient threshold Δc2 is less than the first coefficient threshold Δc1. Alternatively, the filter coefficient adjustment unit 1252 may update only one of the filter coefficient α and the cutoff frequency *f.*

## Claims

1. A riding lawn mower (100), comprising:
a seat (15) for a user to sit thereon;
a chassis (16) configured to support the seat;
a wheel (121,122) configured to support the chassis;
a motor (123) configured to drive the wheel to rotate;
a pedal assembly (131) comprising a pedal lever (1312) rotatable about a first shaft axis (101) to control a walking speed of the riding lawn mower when operated by the user, wherein the pedal assembly comprises a pedal position sensor (132) configured to generate a position signal;
a walking control module (124) configured to drive the motor, wherein the walking control module includes a velocity controller (1241) and a conversion unit (1248) configured to receive position signal as input from the pedal position sensor and outputs a target rotational speed (n*) of the walking motor;
a power supply assembly (14) configured to at least supply electric power to the motor and the walking control module; and
a cutting assembly (11) mounted to the chassis, the cutting assembly comprising a cutting member for cutting grass;
wherein the pedal lever has an initial position;
**characterized in that**
when the pedal lever is in the initial position and power supply assembly is supplying electric power to the motor and the walking control module, the walking control module is configured to control the riding lawn mower to park by following measures:
the velocity controller obtains a target rotational speed 0 rpm of the walking motor from the conversion unit and an actual rotational speed (n) of the walking motor detected by a speed detection module (128),
the velocity controller generates a target current (is*) according to the target rotational speed 0 rpm and the actual rotational speed of the walking motor through comparison and adjustment, wherein the target current is used to make the actual rotational speed of the walking motor approach the target rotational speed 0 rpm,
wherein, whenever the pedal lever is in the initial position and the power supply assembly is supplying electric power to the motor and the walking control module, the walking control module controls the riding lawn mower to park, thereby preventing the wheels rotating freely once released.

2. The riding lawn mower of claim 1, wherein the pedal lever further has an end position and a rotatable range defined as an included angle between the initial position and the end position, the pedal lever is operable by the user to reach any angular position within the rotatable range.

3. The riding lawn mower of claim 2, wherein a minimum value of the rotatable range is 0 degrees and a maximum value of the rotatable range is greater than or equal to 20 degrees and less than or equal to 50 degrees.

4. The riding lawn mower of claim 2, wherein the pedal position sensor (132) is configured to detect an angular position of the pedal lever and generate the position signal, the pedal position sensor being a three-dimensional sensor.

5. The riding lawn mower of claim 4, wherein the pedal assembly further comprises a transmission shaft (1314) that forms a synchronous rotation with the pedal lever, and a magnetic member (1321) fixedly mounted to one end of the transmission shaft close to the pedal position sensor; the pedal position sensor detects an angular position of the magnetic member.

6. The riding lawn mower of claim 5, wherein the pedal assembly further comprises a transmission lever (1317) and a return spring (1325) installed under the transmission lever, the pedal lever forms a synchronous rotation with the transmission lever through the transmission shaft, and the return spring biases the pedal lever into the initial position.

7. The riding lawn mower of claim 4, wherein when a value of the angular position of the pedal lever decreases, the walking control module drives the walking motor to decelerate.

8. The riding lawn mower of claim 4, wherein when a value of the angular position of the pedal lever increases, the walking control module drives the walking motor to accelerate.

9. The riding lawn mower of claim 2, wherein the rotatable range comprises an invariant range, for all position signals within the invariant range, the walking control module sets the same target rotational speed for the motor.

10. The riding lawn mower of claim 1, wherein the pedal position sensor (132) is configured to detect an angular position of the pedal lever and generate the position signal, wherein the walking control module obtains the position signal from the pedal position sensor, and sets the corresponding target rotational speed for the motor based on the position signal.

11. The riding lawn mower of claim 1, wherein the pedal assembly further comprises:
the pedal position sensor (132) configured to detect a position of the pedal lever and output a raw position signal of the pedal lever; and
a signal processing device (125) configured to obtain and process the raw position signal to output a processed position signal;
wherein the walking control module is configured to control the walking speed of the riding lawn mower based on the processed position signal, and the signal processing device comprises:
a filter unit (1251) configured to filter the raw position signal; and
a filter coefficient adjustment unit (1252) configured to compute a difference value between the raw position signal and the processed position signal and set a filter coefficient of the filter unit at least based on the difference value.

12. The riding lawn mower of claim 11, wherein the filter unit is a low-pass filter.

13. The riding lawn mower of claim 12, wherein during an acceleration process, when the difference value between the raw position signal and the processed position signal is greater than a first threshold, the filter coefficient adjustment unit sets the filter coefficient to a first filter coefficient.

14. The riding lawn mower of claim 13, wherein during the acceleration process, when the difference between the raw position signal and the processed position signal is less than a second threshold, the filter coefficient adjustment unit sets the filter coefficient to a second filter coefficient, wherein the second threshold is less than the first threshold and the second filter coefficient is less than the first filter coefficient.

## Patentansprüche

1. Ein Aufsitzrasenmäher (100), umfassend:
einen Sitz (15), auf dem ein Benutzer sitzen kann;
ein Fahrgestell (16), das dazu ausgebildet ist, den Sitz zu tragen;
ein Rad (121,122), das dazu ausgebildet ist, das Fahrgestell zu tragen;
einen Motor (123), der dazu ausgebildet ist, das Rad anzutreiben, um zu rotieren;
eine Pedalanordnung (131), umfassend einen Pedalhebel (1312), der um eine erste Wellenachse (101) drehbar ist, um eine Fahrgeschwindigkeit des Aufsitzrasenmähers zu steuern, wenn er durch den Benutzer betätigt wird, wobei die Pedalanordnung einen Pedalpositionssensor (132) umfasst, der dazu ausgebildet ist, ein Positionssignal zu erzeugen;
ein Fahrsteuerungsmodul (124), das dazu ausgebildet ist, den Motor anzutreiben, wobei das Fahrsteuerungsmodul einen Geschwindigkeitsregler (1241) und eine Umwandlungseinheit (1248) umfasst, die dazu ausgebildet ist, ein Positionssignal als Eingang von dem Pedalpositionssensor zu empfangen und eine Soll-Drehzahl (n*) des Fahrmotors auszugeben;
eine Stromversorgungsanordnung (14), die dazu ausgebildet ist, zumindest elektrische Energie an den Motor und das Fahrsteuerungsmodul zu liefern; und
eine Schneidanordnung (11), die an dem Fahrgestell montiert ist, wobei die Schneidanordnung ein Schneidelement zum Schneiden von Gras umfasst;
wobei der Pedalhebel eine Ausgangsposition aufweist;
**dadurch gekennzeichnet, dass**
wenn der Pedalhebel in der Ausgangsposition ist und die Stromversorgungsanordnung elektrische Energie an den Motor und das Fahrsteuerungsmodul liefert, das Fahrsteuerungsmodul dazu ausgebildet ist, den Aufsitzrasenmäher mittels folgender Maßnahmen zum Parken zu steuern:
der Geschwindigkeitsregler erhält eine Soll-Drehzahl 0 rpm des Fahrmotors von der Umwandlungseinheit und eine Ist-Drehzahl (n) des Fahrmotors, die von einem Drehzahlerfassungsmodul (128) detektiert wird,
der Geschwindigkeitsregler erzeugt einen Sollstrom (is*) gemäß der Soll-Drehzahl 0 rpm und der Ist-Drehzahl des Fahrmotors durch Vergleich und Anpassung, wobei der Sollstrom dazu verwendet wird, die Ist-Drehzahl des Fahrmotors an die Soll-Drehzahl 0 rpm anzunähern,
wobei, wann immer der Pedalhebel in der Ausgangsposition ist und die Stromversorgungsanordnung elektrische Energie an den Motor und das Fahrsteuerungsmodul liefert, das Fahrsteuerungsmodul den Aufsitzrasenmäher zum Parken steuert, wodurch verhindert wird, dass die Räder nach dem Loslassen frei rotieren.

2. Der Aufsitzrasenmäher nach Anspruch 1, wobei der Pedalhebel ferner eine Endposition und einen Drehbereich aufweist, der als ein eingeschlossener Winkel zwischen der Ausgangsposition und der Endposition definiert ist, wobei der Pedalhebel durch den Benutzer betätigbar ist, um jede Winkelposition innerhalb des Drehbereichs zu erreichen.

3. Der Aufsitzrasenmäher nach Anspruch 2, wobei ein Minimalwert des Drehbereichs 0 Grad ist und ein Maximalwert des Drehbereichs größer als oder gleich 20 Grad und kleiner als oder gleich 50 Grad ist.

4. Der Aufsitzrasenmäher nach Anspruch 2, wobei der Pedalpositionssensor (132) dazu ausgebildet ist, eine Winkelposition des Pedalhebels zu detektieren und das Positionssignal zu erzeugen, wobei der Pedalpositionssensor ein dreidimensionaler Sensor ist.

5. Der Aufsitzrasenmäher nach Anspruch 4, wobei die Pedalanordnung ferner eine Übertragungswelle (1314) umfasst, die eine synchrone Rotation mit dem Pedalhebel bildet, und ein magnetisches Element (1321), das fest an einem Ende der Übertragungswelle nahe dem Pedalpositionssensor montiert ist; der Pedalpositionssensor detektiert eine Winkelposition des magnetischen Elements.

6. Der Aufsitzrasenmäher nach Anspruch 5, wobei die Pedalanordnung ferner einen Übertragungshebel (1317) und eine Rückstellfeder (1325) umfasst, die unter dem Übertragungshebel installiert ist, wobei der Pedalhebel über die Übertragungswelle eine synchrone Rotation mit dem Übertragungshebel bildet, und die Rückstellfeder den Pedalhebel in die Ausgangsposition vorspannt.

7. Der Aufsitzrasenmäher nach Anspruch 4, wobei, wenn ein Wert der Winkelposition des Pedalhebels abnimmt, das Fahrsteuerungsmodul den Fahrmotor zum Abbremsen antreibt.

8. Der Aufsitzrasenmäher nach Anspruch 4, wobei, wenn ein Wert der Winkelposition des Pedalhebels zunimmt, das Fahrsteuerungsmodul den Fahrmotor zum Beschleunigen antreibt.

9. Der Aufsitzrasenmäher nach Anspruch 2, wobei der Drehbereich einen invarianten Bereich umfasst, und für alle Positionssignale innerhalb des invarianten Bereichs das Fahrsteuerungsmodul dieselbe Soll-Drehzahl für den Fahrmotor einstellt.

10. Der Aufsitzrasenmäher nach Anspruch 1, wobei der Pedalpositionssensor (132) dazu ausgebildet ist, eine Winkelposition des Pedalhebels zu detektieren und das Positionssignal zu erzeugen, wobei das Fahrsteuerungsmodul das Positionssignal von dem Pedalpositionssensor erhält und die entsprechende Soll-Drehzahl für den Motor auf Grundlage des Positionssignals einstellt.

11. Der Aufsitzrasenmäher nach Anspruch 1, wobei die Pedalanordnung ferner umfasst:
den Pedalpositionssensor (132), der dazu ausgebildet ist, eine Position des Pedalhebels zu detektieren und ein Rohpositionssignal des Pedalhebels auszugeben; und
eine Signalverarbeitungsvorrichtung (125), die dazu ausgebildet ist, das Rohpositionssignal zu erhalten und zu verarbeiten, um ein verarbeitetes Positionssignal auszugeben;
wobei das Fahrsteuerungsmodul dazu ausgebildet ist, die Fahrgeschwindigkeit des Aufsitzrasenmähers auf Grundlage des verarbeiteten Positionssignals zu steuern, und die Signalverarbeitungsvorrichtung umfasst:
eine Filtereinheit (1251), die dazu ausgebildet ist, das Rohpositionssignal zu filtern; und
eine Filterkoeffizient-Anpassungseinheit (1252), die dazu ausgebildet ist, einen Differenzwert zwischen dem Rohpositionssignal und dem verarbeiteten Positionssignal zu berechnen und einen Filterkoeffizienten der Filtereinheit zumindest auf Grundlage des Differenzwerts einzustellen.

12. Der Aufsitzrasenmäher nach Anspruch 11, wobei die Filtereinheit ein Tiefpassfilter ist.

13. Der Aufsitzrasenmäher nach Anspruch 12, wobei während eines Beschleunigungsprozesses, wenn der Differenzwert zwischen dem Rohpositionssignal und dem verarbeiteten Positionssignal größer als ein erster Schwellwert ist, die Filterkoeffizient-Anpassungseinheit den Filterkoeffizienten auf einen ersten Filterkoeffizienten einstellt.

14. Der Aufsitzrasenmäher nach Anspruch 13, wobei während des Beschleunigungsprozesses, wenn die Differenz zwischen dem Rohpositionssignal und dem verarbeiteten Positionssignal kleiner als ein zweiter Schwellwert ist, die Filterkoeffizient-Anpassungseinheit den Filterkoeffizienten auf einen zweiten Filterkoeffizienten einstellt, wobei der zweite Schwellwert kleiner als der erste Schwellwert ist und der zweite Filterkoeffizient kleiner als der erste Filterkoeffizient ist.

## Revendications

1. Une tondeuse autoportée (100), comprenant:
un siège (15) sur lequel un utilisateur peut s'asseoir;
un châssis (16) configuré pour supporter le siège;
une roue (121,122) configurée pour supporter le châssis;
un moteur de déplacement (123) configuré pour entraîner la roue en rotation;
un ensemble de pédale (131) comprenant un levier de pédale (1312) rotatif autour d'un premier axe d'arbre (101) pour commander une vitesse de déplacement de la tondeuse autoportée lorsqu'il est actionné par l'utilisateur, dans lequel l'ensemble de pédale comprend un capteur de position de pédale (132) configuré pour générer un signal de position;
un module de commande de déplacement (124) configuré pour entraîner le moteur de déplacement, dans lequel le module de commande de déplacement comprend un régulateur de vitesse (1241) et une unité de conversion (1248) configurée pour recevoir comme entrée un signal de position depuis le capteur de position de pédale et délivrer une vitesse de rotation cible (n*) du moteur de déplacement;
un ensemble d'alimentation électrique (14) configuré pour fournir au moins de l'énergie électrique au moteur et au module de commande de déplacement; et
un ensemble de coupe (11) monté sur le châssis, l'ensemble de coupe comprenant un organe de coupe pour couper l'herbe;
dans lequel le levier de pédale comporte une position initiale;
**caractérisé en ce que**
lorsque le levier de pédale est en position initiale et que l'ensemble d'alimentation électrique fournit de l'énergie électrique au moteur et au module de commande de déplacement, le module de commande de déplacement est configuré pour commander la tondeuse autoportée pour se garer par les mesures suivantes:
le régulateur de vitesse obtient une vitesse de rotation cible de 0 rpm du moteur de déplacement depuis l'unité de conversion et une vitesse de rotation réelle (n) du moteur de déplacement détectée par un module de détection de vitesse (128),
le régulateur de vitesse génère un courant cible (is*) selon la vitesse de rotation cible de 0 rpm et la vitesse de rotation réelle du moteur de déplacement par comparaison et ajustement, dans lequel le courant cible est utilisé pour amener la vitesse de rotation réelle du moteur de déplacement à se rapprocher de la vitesse de rotation cible de 0 rpm,
dans lequel, chaque fois que le levier de pédale est en position initiale et que l'ensemble d'alimentation électrique fournit de l'énergie électrique au moteur et au module de commande de déplacement, le module de commande de déplacement commande la tondeuse autoportée pour se garer, empêchant ainsi les roues de tourner librement après relâchement.

2. La tondeuse autoportée selon la revendication 1, dans laquelle le levier de pédale comporte en outre une position finale et une plage de rotation définie comme un angle inclus entre la position initiale et la position finale, le levier de pédale pouvant être actionné par l'utilisateur pour atteindre toute position angulaire dans la plage de rotation.

3. La tondeuse autoportée selon la revendication 2, dans laquelle une valeur minimale de la plage de rotation est de 0 degré et une valeur maximale de la plage de rotation est supérieure ou égale à 20 degrés et inférieure ou égale à 50 degrés.

4. La tondeuse autoportée selon la revendication 2, dans laquelle le capteur de position de pédale (132) est configuré pour détecter une position angulaire du levier de pédale et générer le signal de position, le capteur de position de pédale étant un capteur tridimensionnel.

5. La tondeuse autoportée selon la revendication 4, dans laquelle l'ensemble de pédale comprend en outre un arbre de transmission (1314) qui forme une rotation synchrone avec le levier de pédale, et un élément magnétique (1321) monté de manière fixe à une extrémité de l'arbre de transmission proche du capteur de position de pédale; le capteur de position de pédale détecte une position angulaire de l'élément magnétique.

6. La tondeuse autoportée selon la revendication 5, dans laquelle l'ensemble de pédale comprend en outre un levier de transmission (1317) et un ressort de rappel (1325) installé sous le levier de transmission, le levier de pédale forme une rotation synchrone avec le levier de transmission par l'intermédiaire de l'arbre de transmission, et le ressort de rappel ramène le levier de pédale en position initiale.

7. La tondeuse autoportée selon la revendication 4, dans laquelle lorsque une valeur de la position angulaire du levier de pédale diminue, le module de commande de déplacement entraîne le moteur de déplacement pour décélérer.

8. La tondeuse autoportée selon la revendication 4, dans laquelle lorsque une valeur de la position angulaire du levier de pédale augmente, le module de commande de déplacement entraîne le moteur de déplacement pour accélérer.

9. La tondeuse autoportée selon la revendication 2, dans laquelle la plage de rotation comprend une plage invariante, pour tous les signaux de position dans la plage invariante, le module de commande de déplacement règle la même vitesse de rotation cible pour le moteur.

10. La tondeuse autoportée selon la revendication 1, dans laquelle le capteur de position de pédale (132) est configuré pour détecter une position angulaire du levier de pédale et générer le signal de position, dans lequel le module de commande de déplacement obtient le signal de position depuis le capteur de position de pédale, et règle la vitesse de rotation cible correspondante pour le moteur sur la base du signal de position.

11. La tondeuse autoportée selon la revendication 1, dans laquelle l'ensemble de pédale comprend en outre:
le capteur de position de pédale (132) configuré pour détecter une position du levier de pédale et délivrer un signal de position brut du levier de pédale; et
un dispositif de traitement de signal (125) configuré pour obtenir et traiter le signal de position brut afin de délivrer un signal de position traité;
dans lequel le module de commande de déplacement est configuré pour commander la vitesse de déplacement de la tondeuse autoportée sur la base du signal de position traité, et le dispositif de traitement de signal comprend:
une unité de filtrage (1251) configurée pour filtrer le signal de position brut; et
une unité d'ajustement de coefficient de filtre (1252) configurée pour calculer une valeur de différence entre le signal de position brut et le signal de position traité et régler un coefficient de filtre de l'unité de filtrage au moins sur la base de la valeur de différence.

12. La tondeuse autoportée selon la revendication 11, dans laquelle l'unité de filtrage est un filtre passe-bas.

13. La tondeuse autoportée selon la revendication 12, dans laquelle pendant un processus d'accélération, lorsque la valeur de différence entre le signal de position brut et le signal de position traité est supérieure à un premier seuil, l'unité d'ajustement de coefficient de filtre règle le coefficient de filtre sur un premier coefficient de filtre.

14. La tondeuse autoportée selon la revendication 13, dans laquelle pendant le processus d'accélération, lorsque la différence entre le signal de position brut et le signal de position traité est inférieure à un deuxième seuil, l'unité d'ajustement de coefficient de filtre règle le coefficient de filtre sur un deuxième coefficient de filtre, dans lequel le deuxième seuil est inférieur au premier seuil et le deuxième coefficient de filtre est inférieur au premier coefficient de filtre.
